# EUROPÄISCHE PATENTSCHRIFT

(11) **EP 4 091 405 B1**
(45) Veröffentlichungstag und Bekanntmachung des Hinweises auf die Patenterteilung: **18.12.2024**
(21) Anmeldenummer: 21701397.8
(22) Anmeldetag: 12.01.2021
(51) Int. Cl.: H05B 3/12, H05B 3/16, H05B 3/26, H05B 3/34

(54) **BAUPLATTE MIT EINER HEIZFOLIE**
BUILDING BOARD WITH HEATING FOIL
PANNEAU DE CONSTRUCTION AVEC FEUILLE CHAUFFANTE

(30) Priorität: 14.01.2020 DE 102020100746
(43) Veröffentlichungstag der Anmeldung: 23.11.2022
(73) Patentinhaber: Infinite Flex GmbH, 61440 Oberursel (DE); Printenergy GmbH, 2640 Aue (AT); WMT Thermosysteme GmbH, 4531 Kematen a.d. Krems (AT)
(72) Erfinder: BISGES, Michael, 93049 Regensburg (DE); KORNHERR, Andreas, 1100 Wien (AT); HÜTTENBRENNER, Severin, 3340 Waidhofen a.d. Ybbs (AT); KLAFFENBRÖCK, Thomas, 4050 Traun (AT); ASTLEITHNER, Manfred, 4531 Kematen a.d. Krems (AT)
(74) Vertreter: Kohlmann, Kai
(86) Internationale Anmeldenummer: PCT/EP2021/050439
(87) Internationale Veröffentlichungsnummer: WO 2021/144240

(56) Entgegenhaltungen:
- WO-A1-2019/068120
- WO-A2-2007/115559
- DE-A1- 102006 041 775

## Beschreibung

Die Erfindung betrifft eine Bauplatte mit einer Heizfolie, wobei
- die Heizfolie eine Trägerfolie mit einer Oberfläche, mindestens einen auf der Oberfläche aufgebrachten Heizleiter sowie eine Deckfolie oberhalb des mindestens einen Heizleiters umfasst,
- der mindestens eine Heizleiter mindestens 50% der Oberfläche der Trägerfolie abdeckt und
- die Trägerfolie der Heizfolie an einer Oberfläche der Bauplatte befestigt ist und
- die Heizfolie eine Perforation aufweist.

Eine Heizfolie ist eine elektrische Strahlungsheizung, die Strom direkt in Wärme umwandelt. Die flexible Heizfolie weist Heizleiter aus elektrisch leitfähigen Materialien auf, die auf einem Substrat aus elektrisch isolierendem Material, auch als Trägerfolie bezeichnet, aufgebracht sind. Eine Deckfolie, beispielsweise eine dünne Polyesterfolie umhüllt die Heizleiter und schützt diese vor äußeren Einflüssen. Sind die Heizleiter über die angebundenen elektrisch leitenden Kabel mit einer Spannungsquelle, beispielsweise dem Stromnetz verbunden, nehmen sie elektrische Energie auf. Die elektrisch leitfähigen Materialien der Heizleiter weisen einen hohen Widerstand auf, sodass sie sich unter Spannung gleichmäßig erwärmen. Die thermische Energie geben die Heizleiter in Form infraroter Strahlung an die Umgebung ab.

Typisch ist der Einsatz einer Heizfolie als Fußbodenheizung. Aufgrund des besonders dünnen Aufbaus lassen sich Heizfolien nahezu unter jedem Bodenbelag verlegen. Alternativ können Heizfolien auch an Wänden oder Decken von Gebäuden angebracht werden.

Darüber hinaus kommen Heizfolien beispielsweise zur Beheizung von Rohren, Batterien, medizinischen und optischen Geräten sowie von Ausrüstungen zur Beheizung für Speisen und Getränken zum Einsatz.

Heizfolien gibt es als Meterware, die bedarfsgerecht zugeschnitten und individuell an die örtlichen Gegebenheiten angepasst werden können. Heizfolien sind darüber hinaus in vorkonfektionierter Form erhältlich, die im gelieferten Maß verarbeitet werden.

Um möglichst viele Einsatzbereiche abzudecken, sind Heizfolien mit unterschiedlichen Leistungen, beispielsweise zwischen 50 bis 1.000 Watt erhältlich, die als Niedervolt-Heizfolien mit 12, 24, 36 oder 48 Volt oder als Hochleistung-Heizfolien mit 230 Volt betrieben werden. Um die Leistung der Heizfolie an den Bedarf anzupassen, können Heizfolien zudem mit einem Thermostat ausgestattet sein.

Heizleiterlegierungen sind Legierungen aus zwei oder mehr Metallen, die einen relativ hohen spezifischen elektrischen Widerstand haben und eine geringe Neigung zur Oxidation besitzen. Ihre Aufgabe besteht darin, elektrische Leistung in Wärme umzuwandeln. Durch das Legieren werden positive Eigenschaften der einzelnen Metalle für eine Anpassung an den Einsatzzweck als Heizwiderstand genutzt.

Für Heizleiter kommen im Stand der Technik insbesondere Nickel-Kupferlegierungen zum Einsatz, wobei das zulegierte Nickel den elektrischen Widerstand um mehr als Faktor 28 gegenüber reinem Kupfer erhöht. Nickel weist dabei im IR-Bereich ein verstärktes Absorptionsverhalten im Vergleich zu reinem Kupfer auf.

Heizfolien umfassen üblicherweise eine Trägerfolie, einen Heizleiter und eine Deckfolie.

Die DE 20 2006 007 729 U1 offenbart eine Bauplatte mit einer Heizfolie, eine Wandheizplatte. Die Wandheizplatte besteht aus einer ersten und einer zweiten Gipskartonplatte, wobei zwischen den beiden Gipskartonplatten eine Heizfolie in der gleichen Größe wie die Gipskartonplatten eingebettet ist. Die Heizfolie besteht aus einer Trägerfolie, auf der ein elektrisch betreibbares Heizfeld, bestehend aus sechs übereinander angeordneten Teilheizfeldern, angebracht ist.

Die Teilheizfelder bestehen aus einer Strahlungsheizungsbeschichtung, welche beispielsweise Graphit und Ruß enthalten kann und vorzugsweise einen hohen Infrarotanteil im nicht sichtbaren Spektrum abgibt. Auf der Heizfolie kann eine Kaschierfolie als Schutz- und Isolierfolie angebracht sein. Zu beiden Seiten der Teilheizfelder verlaufen flache Leitungsstreifen aus Kupfer zur elektrischen Kontaktierung der Teilheizfelder. Die Teilheizfelder sind so ausgelegt, dass sie mit einer Spannung von 24 Volt und beispielsweise mit einer Leistung von insgesamt 150 Watt betrieben werden können.

Bei der Integration von Heizfolien in derartige Trockenbauplatten aus Gipskarton soll ein effektiver Heizbetrieb gewährleistet werden. Hierbei spielt neben der effektiven Umwandlung des elektrischen Stroms in Wärme auch die Dämmwirkung der Trockenbauplatte eine wesentliche Rolle.

Die US 2006/0289472 A1 offenbart eine Heizfolie mit einem Heizleiter, der mehr als 50% der Oberfläche einer Trägerfolie abdeckt und aus Aluminium besteht. Die Träger- und eine oberhalb des Heizleiters angeordnete Abdeckfolie weisen großflächige Aussparungen in Längs- und Querrichtung auf, die die Anhaftung der Heizfolie an einer Zementschicht oder einer Wandverkleidung fördern.

Die US 2014/0178114 A1 offenbart ein Flächenheizelement mit einer Heizelementschicht und zwei isolierenden Abdeckschichten, die die Außenflächen der Heizelementschicht bedecken. Die Heizelementschicht besteht aus einer Metall-oder Legierungsschicht. Die Legierung kann Aluminium umfassen. Zwei Stromzufuhrabschnitte sind mit gegenüberliegenden Endabschnitten der Heizelementschicht verbunden. Das Flächenheizelemente wird verwendet, um das Innere eines Rohrs zu erwärmen.

Aus der DE 299 22 901 U1 ist eine Heizfolie zum Beseitigen und/oder Verhindern von Feuchtigkeit an der Innenseite von Außenwänden von Gebäuden bekannt. Die mit elektrischen Leiterbahnen versehene Heizfolie weist zwischen den Leiterbahnen Lochungen auf. Die Lochungen sind vorgesehen, damit in dem Gebäude vorhandene Feuchtigkeit auch im Bereich der Heizfolie durch eine mit dieser bekleidete Wand hindurchdiffundieren kann. Die dünnen Leiterbahnen bedecken nur einen außerordentlich geringen Teil der Heizfolie. Die Gesamtfläche der Lochungen beträgt etwa 10% bis 50%, insbesondere etwa 20% der Gesamtfläche der Heizfolie.

Die WO 2019/068120 A1 offenbart eine gattungsgemäße Bauplatte mit einem flächigen Heizelement für den Innenraumausbau, mit einer Gipskartonplatte, die einen zwischen einer ersten und einer zweiten Kartonlage angeordneten Gipskern aufweist, sowie mit einem Flächenheizelement, mit einer über seitliche Anschlusselektroden kontaktierten, elektrisch betreibbaren Heizschicht. Die Heizschicht kann auf eine Trägerfolie als Zwischenschicht aufgetragen sein. Zwischen der Heizschicht und der Oberfläche der Kartonlage ist eine weitere Zwischenschicht angeordnet, die als Sperrschicht gegen den Stofftransport zwischen der Heizschicht und der Kartonlage ausgebildet ist. Die Heizschicht und die Zwischenschichten können sich über die gesamte Länge der Gipskartonplatte erstrecken, so dass freie Bereiche an den Schmalseiten entfallen. Auch die Breite des Heizelements kann variiert werden, so dass freie Bereiche an den Längsseiten breiter oder schmäler ausgebildet sind. Die Zwischenschichten und die Heizschicht weisen zumindest in Teilbereichen gleichmäßig verteilte Durchgangsöffnungen in Form einer Perforation auf, sodass die beiden Schichten für Wasserdampf durchlässig sind.

Ferner offenbart die DE 10 2006 041 775 A1 eine Heizeinrichtung, welche in ein aushärtbares Materialbett aus Fliesenkleber, Mörtel, Estrich und dergleichen einlegbar ist und kostengünstig herstellbar ist, die eine Heizfolie mit einer einen Heizstrom führenden Schicht aus einem Widerstandsmaterial aufweist, wobei die Heizfolie eine Vielzahl von Lochungen aufweist. Die Lochungen in der Heizfolie stellen sicher, dass die erfindungsgemäße Heizeinrichtung in das Materialbett einlegbar ist, indem das Bettmaterial bei der Verlegung durch die Lochungen hindurchfließen kann. Die Heizfolie der Heizeinrichtung kann eine Trägerfolie aus einem Kunststoffmaterial sein, die mit einem elektrischen Widerstandsmaterial beschichtet ist. Als Widerstandsmaterial kann ein Verbundmaterial, das beispielsweise Kohlenstoff umfasst, eingesetzt werden.

Ausgehend von der WO 2019/068120 A1 liegt der Erfindung die Aufgabe zu Grunde, eine Bauplatte mit integrierter Heizfolie zu schaffen, die nicht nur einen effektiven Heizbetrieb gewährleistet, sondern zudem eine verbesserte Dämmwirkung aufweist und zugleich die Bildung von Feuchtigkeit und Schimmel zwischen Bauplatte und der Heizfolie vermeidet.

Diese Aufgabe wird durch eine Bauplatte mit einer Heizfolie mit den Merkmalen des Anspruchs 1 gelöst. Vorteilhafte Ausgestaltungen der Erfindung ergeben sich aus den Unteransprüchen.

Die Bauplatten, wie Gipskartonplatten, können unmittelbar mit einer Heizfolie ausgerüstet werden, indem die Trägerfolie der Heizfolie an einer Oberfläche der Bauplatte befestigt ist. Die Befestigung kann mittels einer Klebstoffschicht erfolgen.

Nach dem Stand der Technik tragen übliche Heizfolien nicht zur Wärmedämmung bei. Die Lösung basiert nun auf dem Gedanken, eine Heizfolie mit integrierten Reflexionseigenschaften für die Infrarotstrahlung über das gesamte Energiespektrum, d.h. über den gesamten Wellenlängenbereich von etwa 780 nm bis 1 mm, an der Bauplatte zu befestigen.

Der mindestens eine Heizleiter deckt mindestens 50% der Oberfläche der Trägerfolie ab und besteht aus einem metallischen Werkstoff, welcher auf den Heizleiter auftreffende Infrarotstrahlung zu mindestens 80% reflektiert. Der die Infrarotstrahlung reflektierende metallische Werkstoff des Heizleiters ist eine Aluminiumlegierung mit einem Massenanteil des Aluminiums von mindestens 98%.

Um einen Durchtritt von Feuchtigkeit durch die ansonsten für Feuchtigkeit undurchlässige Heizfolie zu ermöglichen, weist die Heizfolie eine Perforation auf, wobei
- die Perforation eine Durchlochung der Heizfolie mit Mikrolöchern ist,
- die Mikrolöcher einen Durchmesser in einem Bereich von 0,1 bis 0,3 mm aufweisen und
- auf einer Fläche der Heizfolie von 1 cm² maximal 100 Mikrolöcher angeordnet sind.

Indem auf einer Fläche von 1 cm² der Heizfolie maximal 100 Mikrolöcher angeordnet sind, wird die Funktion der Heizfolie nicht beeinträchtigt. Die Mikroperforation der an einer Bauplatte befestigten Heizfolie vermeidet jedoch die Bildung von Feuchtigkeit und Schimmel zwischen Bauplatte und der Heizfolie. Die Feuchtigkeit kann durch die Perforation der Heizfolie hindurch diffundieren.

Die Mikrolöcher mit einem Durchmesser von 0,1-0,3 mm können beispielsweise im Wege des Laserbohrens hergestellt werden. Die Anzahl liegt typischerweise in einem Bereich von 5-100 Mikrolöchern/cm². Sämtliche Mikrolöcher weisen eine übereinstimmende Form und Größe auf.

Die Mikrolöcher sind vorzugsweise regelmäßig über die Oberfläche des Heizelementes verteilt angeordnet und/oder weisen eine übereinstimmende Form und Größe auf.

Die Mikrolöcher können die Bereiche der Heizfolie zwischen den Heizleitern, aber auch die Bereiche mit den Heizleitern durchsetzen.

Die Trägerfolie, die Deckfolie und ggf. die Heizleiter weisen außer den Mikrolöchern keine weiteren, die Heizfolie durchsetzende Öffnungen, wie z.B. Durchbrechungen, Aussparungen oder dergleichen, auf, um die Dämmwirkung der mit der Heizfolie versehenen Bauplatte nicht zu beeinträchtigen. Vorzugsweise bedeckt die Trägerfolie der Heizfolie die gesamte Oberfläche der Bauplatte.

Bei einer besonders bevorzugten Aluminiumlegierung EN-AW 8079 als Werkstoff für den mindestens einen Heizleiter wird durch Zusatz von Eisen und Silizium eine höhere Zugfestigkeit bei zugleich guter Umformbarkeit erreicht. Diese Legierung ist auch für die Ausbildung der Heizleiter als Folie mit geringer Dicke bis etwa 0,05 mm besonders geeignet. Die Heizleiter werden auf der Trägerfolie vorzugsweise in Form von Leiterbahnen aufgebracht.

Um die Haftfähigkeit der elektrischen Kontakte auf den im Wesentlichen aus Aluminium bestehenden Heizleiterbahnen zu verbessern, kann die Oberflächenaktivierung und der Metallisierungsprozess zur Ausbildung der elektrischen Kontakte im Wege der Plasmametallisierung vorteilhaft in einem Schritt durchgeführt werden. Die Kontakte bestehen beispielsweise aus Kupfer.

Der mindestens eine Heizleiter weist eine geringe Dicke im Bereich von 1-50 um, vorzugsweise von 3-10 um auf. Die geringe Dicke erlaubt eine problemlose Integration der Heizfolie. Außerdem gewährleistet die geringe Dicke des Heizleiters aus einer Aluminiumlegierung, einen ausreichend hohen elektrischen Widerstand. Der Heizleiter wird vorzugsweise als bahnförmige Schicht oder Folie mit geringer Dicke aufgebracht. Die Breite des Heizleiters beträgt mindestens das 20-fache der Dicke. Die Dicke des Heizleiters ist vorzugsweise über die gesamte Heizfolie konstant. Die Breite kann indes abhängig vom verfügbaren Platz variieren. Typische Breiten des bahnförmigen Heizleiters liegen im Bereich von 100µm bis 5mm.

Sowohl die Trägerfolie als auch die Deckfolie bestehen vorzugsweise aus Kunststoffen mit elektrisch isolierenden Eigenschaften und hoher Wärmebeständigkeit, wie insbesondere PET (Polyethylenterephthalat) oder PI (Polyimid).

Um den bestehenden Vorschriften in Bezug auf den Brandschutz zu genügen, ist in einer Ausgestaltung der Erfindung vorgesehen, dass oberhalb der Deckfolie eine flammhemmende Oberfläche auf der Heizfolie angeordnet ist. Die Oberfläche kann beispielsweise als flammhemmende Papierbahn oder als flammhemmende Dekoroberfläche ausgebildet sein.

Die Heizfolie wird vorzugsweise mit Niederspannung im Bereich zwischen 12-50 V betrieben. Grundsätzlich ist auch ein Betrieb mit höheren Spannungen, beispielsweise einer Netzspannung von 230 V möglich. Höhere Spannungen sind bei Anwendungen im Wohnbereich auf mit Heizfolien ausgerüsteten Bauplatten jedoch kritisch, da beispielsweise das Einbringen von Bohrlöchern oder Nägeln in die Bauplatte zu einem elektrischen Schlag führen können.

Nachfolgend wird die Erfindung anhand der Zeichnung näher erläutert. Es zeigen
- **Figur 1**: eine teilweise Darstellung einer Heizfolie einer erfindungsgemäßen Bauplatte mit einer Heizfolie in Aufsicht,
- **Figur 2**: eine Gesamtdarstellung der Heizfolie nach Figur 1 sowie
- **Figur 3**: ein Diagramm zu den Reflexionseigenschaften verschiedener Metalle.

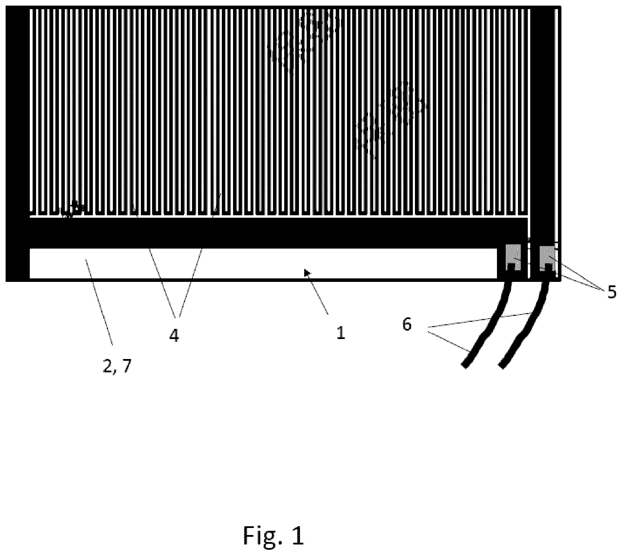

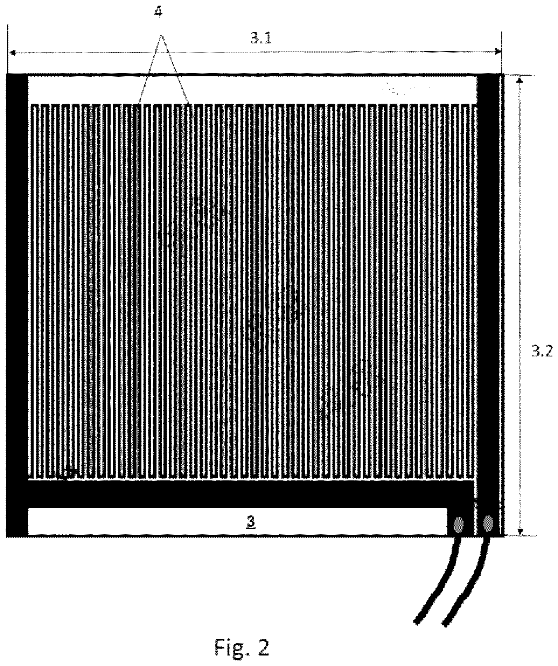

Figur 1 zeigt einen Ausschnitt einer Heizfolie 1 umfassend eine Trägerfolie 2 mit einer Oberfläche 3. Die Oberfläche 3 weist eine Breite 3.1 und eine Länge 3.2 auf, wie dies in Figur 2 dargestellt ist.

Auf der Oberfläche 3 sind mehrere elektrisch parallel geschaltete Heizleiter 4 aufgebracht. Jeder Heizleiter 4 kann als Beschichtung auf der Oberfläche 3 abgeschieden oder in Form einer Folie aufgebracht werden. Die Folie wird haftfest an der Oberfläche 3 der Trägerfolie 2, beispielsweise mittels einer Klebstoffschicht, befestigt. Jeder Heizleiter 4 weist die Form einer Leiterbahn auf, die wendelförmig auf der Oberfläche 3 angeordnet ist.

Die wendelförmigen Heizleiter 4 bedecken mehr als 50% der Oberfläche 3 der Trägerfolie 2 und bestehen aus einem metallischen Werkstoff, der auf die Heizleiter 4 auftreffende Infrarotstrahlung zu mindestens 80% reflektiert.

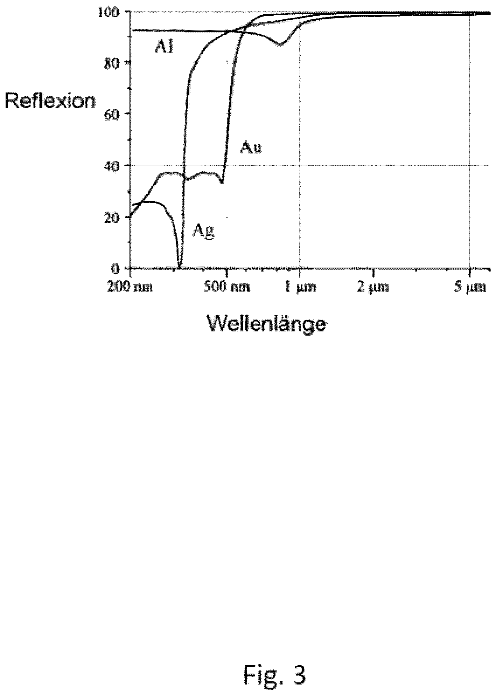

Figur 3 zeigt die Reflexionswerte für auf die Metalle Silber (Ag), Gold (Au) und Aluminium (Al) auftreffende elektromagnetische Strahlung abhängig von der Wellenlänge der Strahlung. Aus Figur 3 ist erkennbar, dass über den gesamten Infrarotbereich ab 780 nm bis 1 mm die Reflexionswerte der vorgenannten Metalle für Infrarotstrahlung deutlich oberhalb von 80 % liegen.

Die reinen Metalle weisen jedoch einen zu geringen spezifischen elektrischen Widerstand auf und sind daher zur Ausbildung der Heizleiter 4 weniger geeignet. Erfindungsgemäß eingesetzt werden daher Heizleiterlegierungen unter Verwendung von Aluminium als Hauptbestandteil, die einen relativ hohen spezifischen elektrischen Widerstand haben und eine geringe Neigung zur Oxidation besitzen. Durch die Legierung werden die günstigen Eigenschaften des Aluminiums in Bezug auf die Reflexion für den Einsatz als Heizwiderstand angepasst.

Die Aluminiumlegierung weist einen Massenanteil des Aluminiums von mindestens 98% auf. Der hohe Massenanteil stellt sicher, dass mindestens 80 % der auf den Heizleiter 4 auftreffenden Infrarotstrahlung reflektiert wird. Da mehr als 50 % der Oberfläche 3 mit Heizleitern 4 bedeckt sind, wird der Durchgang von Wärme durch die Heizfolie 1 wirksam reduziert.

An den Enden sind die Heizleiter 4 mit flächigen, elektrischen Kontakten 5 verbunden. Die flächigen Kontakte 5 werden im Wege der Plasmametallisierung auf den Heizleitern 4 abgeschieden. An den flächigen Kontakten 5 werden Verbindungskabel 6 zum elektrischen Anschluss der Heizfolie 1 an eine nicht dargestellte Spannungsquelle angelötet. Um eine sichere Lötverbindung herzustellen, bestehen die flächigen Kontakte 5 beispielsweise aus Kupfer oder einer Kupferlegierung.

Jeder Heizleiter 4 weist eine Dicke im Bereich von 3-10 µm auf. Zum Schutz des Heizleiters 4 ist oberhalb des Heizleiters eine Deckfolie 7 angeordnet. Die Deckfolie 7 weist übereinstimmende Abmessungen wie die Trägerfolie 2 auf, sodass die Heizleiter 4 zusammen mit der Träger- und Deckfolie 2,7 ein Laminat bildet. Die Trägerfolie 2 und die Deckfolie 7 bestehen aus elektrisch isolierendem Material, insbesondere aus Kunststoff.

Die in den Figuren nicht dargestellte Bauplatte, wie beispielsweise eine Gipskartonplatte, wird mit der Heizfolie 1 ausgerüstet, indem die Trägerfolie 2 der Heizfolie 1 an einer Oberfläche der Bauplatte befestigt ist. Die Befestigung erfolgt beispielsweise mittels einer Klebstoffschicht.

Indem auf einer Fläche von 1 cm² der Heizfolie 1 maximal 100 Mikrolöcher angeordnet sind, wird die Funktion der Heizfolie nicht beeinträchtigt. Die Mikroperforation der an der Bauplatte befestigten Heizfolie 1 vermeidet jedoch die Bildung von Feuchtigkeit und Schimmel zwischen Bauplatte und der Heizfolie. Die Feuchtigkeit kann durch die Perforation der Heizfolie 1 hindurch diffundieren.

### Bezugszeichenliste

- 1: Heizfolie
- 2: Trägerfolie
- 3: Oberfläche
- 3.1: Breite
- 3.2: Länge
- 4: Heizleiter
- 5: Kontakte
- 6: Verbindungskabel
- 7: Deckfolie

## Patentansprüche

1. Bauplatte mit einer Heizfolie (1), wobei
- die Heizfolie (1) eine Trägerfolie (2) mit einer Oberfläche (3), mindestens einen auf der Oberfläche (3) aufgebrachten Heizleiter (4) sowie eine Deckfolie (7) oberhalb des mindestens einen Heizleiters (4) umfasst,
- der mindestens eine Heizleiter (4) mindestens 50% der Oberfläche der Trägerfolie (2) abdeckt,
- die Trägerfolie (2) der Heizfolie (1) an einer Oberfläche der Bauplatte befestigt ist und
- die Heizfolie (1) eine Perforation aufweist,
**dadurch gekennzeichnet, dass**
- der mindestens eine Heizleiter (4) aus einem metallischen Werkstoff besteht, welcher auf den Heizleiter (4) auftreffende Infrarotstrahlung zu mindestens 80% reflektiert, wobei der metallische Werkstoff eine Aluminiumlegierung mit einem Massenanteil des Aluminiums von mindestens 98% ist,
- die Perforation eine Durchlochung der Heizfolie (1) mit Mikrolöchern ist,
- die Mikrolöcher einen Durchmesser in einem Bereich von 0,1 bis 0,3 mm aufweisen und
- auf einer Fläche der Heizfolie (1) von 1 cm² maximal 100 Mikrolöcher angeordnet sind.

2. Bauplatte mit einer Heizfolie nach Anspruch 1, **dadurch gekennzeichnet, dass** die Anzahl der Mikrolöcher in einem Bereich zwischen 5 - 100 Mikrolöcher/cm² der Heizfolie liegt.

3. Bauplatte mit einer Heizfolie nach Anspruch 1 oder 2, **dadurch gekennzeichnet, dass** die Mikrolöcher regelmäßig über die Oberfläche der Heizfolie (1) verteilt angeordnet sind und/oder eine übereinstimmende Form und Größe aufweisen.

4. Bauplatte mit einer Heizfolie nach einem der Ansprüche 1 bis 3, **dadurch gekennzeichnet, dass** der metallische Werkstoff die Aluminiumlegierung EN-AW 8079 ist.

5. Bauplatte mit einer Heizfolie nach einem der Ansprüche 1 bis 4, **dadurch gekennzeichnet, dass** der mindestens eine Heizleiter (4) als Folie oder Beschichtung auf die Trägerfolie (2), vorzugsweise in Form einer Leiterbahn aufgebracht ist.

6. Bauplatte mit einer Heizfolie nach einem der Ansprüche 1 bis 5, **dadurch gekennzeichnet, dass** der mindestens eine Heizleiter (4) im Wege der Plasmametallisierung auf dem Heizleiter abgeschiedene elektrische Kontakte (5) aufweist.

7. Bauplatte mit einer Heizfolie nach einem der Ansprüche 1 bis 6, **dadurch gekennzeichnet, dass** der mindestens eine, flächige Heizleiter (4) eine Dicke im Bereich von 1-50 µm, vorzugsweise von 3-10 um aufweist.

8. Bauplatte mit einer Heizfolie nach einem der Ansprüche 1 bis 7, **dadurch gekennzeichnet, dass** die Trägerfolie (2) und/oder die Deckfolie (7) aus Kunststoff bestehen.

9. Bauplatte mit einer Heizfolie nach einem der Ansprüche 1 bis 8, **dadurch gekennzeichnet, dass** oberhalb der Deckfolie (7) eine flammhemmende Oberfläche auf der Heizfolie (1) angeordnet ist.

## Claims

1. Building panel comprising a heating film (1), wherein
- the heating film (1) comprises a carrier film (2) with a surface (3), at least one heating conductor (4) applied to the surface (3) and a cover film (7) above the at least one heating conductor (4),
- the at least one heating conductor (4) covers at least 50 % of the surface of the carrier film (2),
- the carrier film (2) of the heating film (1) is attached to a surface of the building panel, and
- the heating film (1) has a perforation,
**characterized in that**
- the at least one heating conductor (4) consists of a metallic material which reflects at least 80 % of the infrared radiation incident on the heating conductor (4), wherein the metallic material is an aluminium alloy with a mass fraction of aluminium of at least 98 %,
- the perforation is a perforation of the heating film (1) with micro-holes,
- the micro-holes have a diameter in a range of 0.1 to 0.3 mm and
- a maximum of 100 micro-holes are arranged on an area of the heating film (1) of 1 cm².

2. Building panel comprising a heating film according to Claim 1, **characterized in that** the number of micro-holes is in a range between 5 - 100 micro-holes/cm² of the heating film.

3. Building panel comprising a heating film according to Claim 1 or 2, **characterized in that** the micro-holes are regularly distributed over the surface of the heating film (1) and/or have a consistent shape and size.

4. Building panel comprising a heating film according to one of Claims 1 to 3, **characterized in that** the metallic material is the aluminium alloy EN-AW 8079.

5. Building panel comprising a heating film according to one of Claims 1 to 4, **characterized in that** the at least one heating conductor (4) is applied as a film or coating to the carrier film (2), preferably in the form of a conductor track.

6. Building panel comprising a heating film according to one of Claims 1 to 5, **characterized in that** the at least one heating conductor (4) has electrical contacts (5) deposited on the heating conductor by means of plasma metallization.

7. Building panel comprising a heating film according to one of Claims 1 to 6, **characterized in that** the at least one flat heating conductor (4) has a thickness in the range of 1-50 um, preferably 3-10 µm.

8. Building panel comprising a heating film according to one of Claims 1 to 7, **characterized in that** the carrier film (2) and/or the cover film (7) consist of plastic.

9. Building panel comprising a heating film according to one of Claims 1 to 8, **characterized in that** a flame-retardant surface is arranged on the heating film (1) above the cover film (7).

## Revendications

1. Panneau de construction, pourvu d'un film chauffant (1) ,
- le film chauffant (1) comprenant un film de support (2) doté d'une surface (3), au moins un conducteur chauffant (4) appliqué sur la surface (3), ainsi qu'un film de recouvrement (7) au-dessus de l'au moins un conducteur chauffant (4),
- l'au moins un conducteur chauffant (4) recouvrant au moins 50 % de la surface du film de support (2),
- le film de support (2) du film chauffant (1) étant fixé sur une surface du panneau de construction et
- le film chauffant (1) comportant une perforation, **caractérisé en ce que**
- l'au moins un conducteur chauffant (4) est constitué d'un matériau métallique, lequel réfléchit à raison d'au moins 80 % un rayonnement infrarouge incident sur le conducteur chauffant (4), le matériau métallique étant un alliage d'aluminium avec une part en masse d'aluminium d'au moins 98 %,
- la perforation étant un perçage du film chauffant (1) de microtrous,
- les microtrous présentant un diamètre de l'ordre de 0,1 à 0,3 mm et
- sur une surface de 1 cm² du film chauffant (1) étant placé un maximum de 100 microtrous.

2. Panneau de construction pourvu d'un film chauffant selon la revendication 1, **caractérisé en ce que** le nombre des microtrous se situe dans un ordre compris entre de 5 à 100 microtrous/cm² du film chauffant.

3. Panneau de construction pourvu d'un film chauffant selon la revendication 1 ou 2, **caractérisé en ce que** les microtrous sont distribués régulièrement sur la surface du film chauffant (1) et / ou présentent une forme et dimension concordantes.

4. Panneau de construction pourvu d'un film chauffant selon l'une quelconque des revendications 1 à 3, **caractérisé en ce que** le matériau métallique est l'alliage d'aluminium EN-AW 8079.

5. Panneau de construction pourvu d'un film chauffant selon l'une quelconque des revendications 1 à 4, **caractérisé en ce que** l'au moins un conducteur chauffant (4) est appliqué sur le film de support (2) sous la forme d'un film ou d'un revêtement, de préférence sous la forme d'une piste conductrice.

6. Panneau de construction pourvu d'un film chauffant selon l'une quelconque des revendications 1 à 5, **caractérisé en ce que** l'au moins un conducteur chauffant (4) comporte des contacts (5) électriques déposés sur le conducteur chauffant par voie d'une métallisation au plasma.

7. Panneau de construction pourvu d'un film chauffant selon l'une quelconque des revendications 1 à 6, **caractérisé en ce que** l'au moins un conducteur chauffant (4) plan présente une épaisseur de l'ordre de 1 à 50 µm, de préférence de 3 à 10 pm.

8. Panneau de construction pourvu d'un film chauffant selon l'une quelconque des revendications 1 à 7, **caractérisé en ce que** le film de support (2) et / ou le film de recouvrement (7) sont constitués de matière plastique.

9. Panneau de construction pourvu d'un film chauffant selon l'une quelconque des revendications 1 à 8, **caractérisé en ce qu'**au-dessus du film de recouvrement (7), une surface retardatrice de combustion est appliquée sur le film chauffant (1).
